Europäisches Patentamt

European Patent Office

Office européen des brevets

(11) Publication number: **0 493 620 A1**

## EUROPEAN PATENT APPLICATION
### published in accordance with Art. 158(3) EPC

(21) Application number: **91913094.8**

(22) Date of filing: **23.07.91**

(86) International application number:
**PCT/JP91/00981**

(87) International publication number:
**WO 92/01846 (06.02.92 92/04)**

(51) Int. Cl.5: **E04F 15/024**, E04F 15/04, E04F 15/18

(30) Priority: **23.07.90 JP 194574/90**

(43) Date of publication of application:
**08.07.92 Bulletin 92/28**

(84) Designated Contracting States:
**BE CH DE FR GB IT LI**

(71) Applicant: **MIURA, Hirokazu**
**4 Kitahiyoshi-cho Imagumano**
**Higashiyama-ku**
**Kyoto-shi, Kyoto 605(JP)**

(72) Inventor: **MIURA, Hirokazu**
**4 Kitahiyoshi-cho Imagumano**
**Higashiyama-ku**
**Kyoto-shi, Kyoto 605(JP)**

(74) Representative: **Mongrédien, André**
**c/o SOCIETE DE PROTECTION DES**
**INVENTIONS 25, rue de Ponthieu**
**F-75008 Paris(FR)**

(54) FREE ACCESS FLOOR STRUCTURE.

(57) A free access floor structure permitting free wiring therewithin and comprising a combination of legged floor boards (1, 2), floor surface covering members (3), and buffer members (4), in which the floor boards (1, 2) are each a plate-like cubic body on an assemblage thereof having legs equal to each other in length at at least corner parts, and assembled in such manner that they are disposed on the ground (5) with the upper surface thereof covered with floor surface covering members (3) to be bonded thereto as well as with buffer members (4) interposed between the underside of the legs and the ground (5), or disposed on the ground (5) with buffer members (4) interposed between the underside of the legs and the ground (5) and with covering members (3) placed thereon so as to provide a free space for wiring between the floor boards (1, 2) and the ground (5).

FIG.1

[Technical Field]

The present invention relates to a double flooring. The double flooring is formed so that a plurality of double flooring units may be placed directly on a placed floor or on a concrete slab when setting up the wiring of, for example, computers, telephones, and other electrical apparatuses and the like to facilitate the modifying of the positions of equipment in automated offices and houses. In particular, the present invention relates to a double flooring in which numerous electric cords, optical fibers and the other types of cables of office equipment and household appliances such as telephones may be disposed as desired.

[Background Art]

In the process of converting a conventional office or house to an automated office or house, apparatuses for office automation and house automation are continually improved, especially with respect to changing the dispositions of the apparatuses and the reconnecting of the apparatuses. Therefore, double flooring has been rapidly adopted so as to be able to easily retract the connected electric cords or connector and the like, and to be able to change the positions thereof. As the double flooring in accordance with the above, many types have been developed and proposed; for example, the "placed type", the "supporting foot separating type" and the "floor operational separating type".

A unit of the placed type comprises a board material as a floor face and foot portions on the board material; the floor is formed so that plural units of the placed type are placed on a floor or a slab. Thereby, space for wiring is formed between the units of the placed type and the placed floor.

A unit of the supporting feet separating type comprises a board material; as floor face and feet portions separating the board material, the floor is formed in order that the foot portions be provided on the placed floor and the like. The floor materials are placed on the foot portions. Hereby, space for wiring is formed between the units of the supporting feet separating type and the placed floor.

A unit of the floor operational separating type is comprising a board having a lower channel surface therein; the floor is formed in order that the plural units of the floor operation separating type are put on the placed floor and the like. Hereby, space for wiring is formed between the units of the operational separating type and the placed floor.

[Disclosure of the Invention]

However, the double flooring of these types have the following problems, among others.

It is difficult, even when the double flooring as above is provided, to move apparatuses for office automation or house automation when necessary. This is because the provided electric cords are too short or too long. Furthermore, the floor boards over the cord have to be pulled off in order to remove the electric cords, and the electric cord is then passed among the other electric cords. On the other hand, if the electric cords are left in place, they will be damaged in many cases if, for example, the electric cords are pulled. If many electric cords are left as they are, the area below the double flooring will be filled with the electric cords, thus wasting space. Furthermore, when the electric cord is newly rewired, it is difficult to figure out which electric cord will be used and which will not be used. In the case of the electric cords left, the high voltage electric cords among the electric cords are fixed by tape; however, not only does the adhesion of the tape decrease over time, but also the taped portions of the electric cords may be exposed by pulling. In this situation, the area below the floor is filled with exposed electric cords, and it is therefore not surprising that electric shorts may result. Furthermore, once a fire occurs, chlorine gas may be emitted from the other electric cords, posing an even greater danger.

Furthermore, in the double flooring of the prior art, the high voltage electric cords and low voltage electric cords may be confused when the electric cords are rewired. In addition, electromagnetic waves from the high voltage electric cords may produce deleterious effects on the low voltage electric cords.

In consideration of the above problem, it is an object of the present invention to provide a double flooring for wiring installation which is easy to rewire and can prevent electric shorts caused by bare electric cords as compared with the prior art.

So as to satisfy these and other objects, the present invention provides a double flooring for wiring installation comprising:

a floor board having feet of equal length at the corners thereof at least;

a decorative material provided on the floor board having feet; and

absorbing materials attached, for example, below each foot;

whereby, the space for wiring is formed between the lower surface of the floor board having feet and the upper surface of the placed floor.

Since the function and advantages of the double flooring for wiring installation as constructed as above the double flooring for wiring installation, the load on the floor board having the feet is transmitted to the placed floor and the like through the feet. If the clearance between the surface below the foot without the absorbent material and the top surface of the placed floor exists, when the lower surface of the foot hits the top surface of the placed floor, noise is produced. However, in the above construction, the noise is decreased because of the absorbent material below the surface of the foot.

Preferably, the floor board has feet which has missing portion of reentrant-shape provided at corner portions thereof;

the decorative material is rectangular having an dimension the same as the dimension of the floor board having feet, which is provided on the floor board having feet;

the absorbent material is sheet-shaped, which is provided at least under the feet; and

furthermore, at least one corner base has the same shape as the shape of the grouped missing portions in plan view which is formed by four adjacent floor boards having feet;

a plurality of the floor boards having feet and corner bases are disposed on the placed floor and the like so as to insert the corner base into the grouped missing portions;

each absorbent material is provided on the floor boards having feet so that the corner of each piece of absorbent material exists on the top of each corner base.

The decorative materials for the floor have less strength than the floor board. Accordingly, each corner of the decorative material is fixed on the corner base by tape, glue, hooks and the like in order to withstand being stepped on. The corner base may be on the missing portion.

Preferably, the floor board comprising nine floor boards having feet are provided at at least four corners of the floor boards having feet, each floor board having feet which are square, the nine floor boards having feet are arranged to form a square, a floor board having a missing portion of reentrant part shaped at the four corner of the floor board;

the corner base which is the same shape as the shape of the aggregated four missing portions;

the absorbent material is glued on the lower surface of the corner base;

the decorative material is provided on the surface of the floor board, except on the missing portion;

the absorbent material is provided on the lower surface of each foot;

the floor board is disposed on the placed floor and the like so that the corner base is provided at the missing portion, and each corner of the decorative material is glued to the top surface of the corner base by adhesive.

The area of floor board is, for example, 165 cm square. In this case, the area of each foot is 40 cm square. The human stride is accommodated because each is 80 cm which is approximately the length a human step.

Preferably, in the floor board comprising the nine floor boards having feet, the feet are provided at at least the four corners portions thereof, each floor board of unitary construction and reinforced by at least one beam, except at the corner portions thereof, each floor board being square, the nine floor boards having feet arranged to be grouped in a square, a floor board having the missing portions of reentrant part formed at the four corners thereof;

a corner base which is the same shape as the shape of the grouped four missing portions;

the absorbent material is glued on the lower surface of the corner base;

the decorative material is provided on the surface of the floor board, except at the missing portions;

the absorbent material is provided on the lower surface of each foot;

the floor board is disposed on the placed floor and the like so that the corner base is provided at the missing portion, and each corner of the decorative material is pasted on the top surface of the corner base by an adhesive.

Furthermore, it is possible to set wires in a grid pattern. In this case, the electric cords are on each bolster base, orthogonal electric cords thereof are between the bolster bases, the electric cords and the orthogonal electric cords thereof are cross at a levels. Hereby, electric cords do not kink, there is no breaking of wires when the wires are pulled out; accordingly, easy rewiring is possible.

Preferably, five floor boards having feet exist in the middle of the nine floor boards having feet, each floor board having feet of the five floor boards having feet being of unitary construction, each floor board having feet comprising girders for reinforcement provided on the lower surface of each of the four sides of each floor board having feet of the five floor boards having feet, and four feet are of equal height and are vertically provided at each cross section between each girder;

four floor boards having feet for the corners which exist at the corners of the nine floor boards, each floor board having feet for the corner which is unitary, each floor board having feet for the corner comprising missing portions which are arc-shaped in plane view, each missing portion is provided at each corner of four floor boards having feet at the corners; beams being arc-shaped in plane view, each beam provided on the lower surface of the missing portion, and five feet of equal height, three of which are vertically provided at each corner of the floor boards at the corners, thereof the other feet are vertically provided at both sides of the beam;

shallow channels are half arc-shaped in plane view, each of which is provided at the top surface of the center of each side not having beam portion of the floor board having feet at the corner;

pushing portions for cutting are semicircular in plane view, having a radius greater than the inner radius of the shallow channel, each of which is provided at the lower surface of each side not having a beam portion of the floor board having feet for the corner so as to be concentric;

the corner base is flat and circular in plane view, is hollow, has no bottom, the height being the same as the length between the top surface of the floor board having the feet and the lower surface of the feet, and the sides are bowed outward.

Preferably, furthermore, bolster bases in which at least two are square-shaped, each of which is half the height the floor board having feet, the bolster base, which are provided on the placed floor and the like so as to be parallel to each other, the floor boards are lyingly provided on the placed floor so that the feet of the floor board are not disposed on the bolster bases. Furthermore, the bolster bases may have both ends as formed inclined surface, have heights half that of the feet of the floor boards, and are lyingly provided on the placed floor so as to be in line and parallel to one another. Hereby, it is possible that wiring is facilitated.

Preferably, in the floor board having feet, the corner base and the bolster base are made of thermo insulating materials, a thin sheet of which is glued on the lower surface of the feet as the absorbent materials.

Hereby, thermal transfer to the placed floor and the like is prevented.

Preferably, a lower rope group comprising a plurality of lower ropes, which is passed through other wires and the space which is formed by the plurality of feet so as to be parallel to the line, the lower rope group is turned at the required turning points, for example, close to a wall, so that each lower rope group is in the form of a cable;

an upper rope group comprising a plurality of upper ropes, which is formed in a cable in a shape the same as the lower rope group, which is perpendicular to the lower rope group;

pulleys are provided at each turning point, each of which supports each upper rope and each lower rope.

Hereby, it is possible to wire the electric cords without the worker moving. Accordingly, it is possible to perform the wiring.

preferably, plural bolster bases are provided on the placed floor and the like so as to be parallel to one another;

furthermore, a rotatable-type apparatus is provided for a distribution apparatus comprising:

a lower group comprising a plurality of lower ropes which pass through other wires and the space in which the bolster base does not exist, the lower group is turned at the required turning points so that each lower rope is in the form of a cable;

an upper group comprising a plurality of upper ropes, which pass through the bolster base, is turned at the required turning points, and is returned on the other bolster base, which is formed to be in the form of a cable the same as the lower group.

Hereby, plural electric cords may be wired by opening only three floor boards.

Preferably, each pulley for supporting the upper rope group and for supporting the lower rope group is rotatably provided an the board-shaped body which has a missing corner, at least one of which is engaged with the reentrant-shape to the feet;

each board-shaped body is provided on the placed floor and the like so as to engage the feet and to differ from the height of the channel of the pulley for supporting the upper rope group and the height of channel of the pulley for supporting the lower rope group.

Hereby, it is possible to wire stably because the lower sides of the feet absorb the force on the pulleys by tension of the ropes.

Preferably, the decorative materials for the floor may be the decorative materials for the floor:

are of the same dimensions as the floor board;

are of at least two kinds;

are cut in the same form; and

wherein a plurality cut of decorative materials is mixed and pasted on the floor board;

whereby, double flooring for wiring installation may be freely designed by arranging many kinds of divided decorative material.

Hereby, it is possible to freely design by arranging many kinds of divided decorative material.

Preferably, the decorative material is of the same dimensions measure as the top surface dimension of the floor board having feet, is square, is of at least two colors, is divided into two, four, or six equal parts by lines which are parallel or diagonal to the sides thereof, whereby, double flooring for wiring installation may be freely designed by arranging many kind of divided decorative material.

Hereby, the geometric design is formed on the surface of the floor boards.

Preferably, the decorative material is of the same dimension as the top surface dimension of the floor board having feet, wooden flooring material having the split liner through a predetermined distance on the back surface thereof; or having the absorber on the back surface thereof.

In general, flooring material of wood has strength in the longitudinal direction thereof. Accordingly, if the flooring materials are only put on the surface of the floor boards, squeaking sounds will occur and warping will occur due to temperature differences. However, when cutting the fiber of the wood of the flooring material, or when the absorber is provided on the floor boards, the force for the warping and the like does not occur in the longitudinal direction and the orthogonal direction. As a result, the split liner or the absorber prevents the resonance.

Preferably, the decorative material is laminated wood material of a square shape or a composite comprising compressed wood and the like, the back surface of the laminated wood material is glued by pressure sensitive adhesive double coated tape; the laminated woods material is compressed high strength material which is glued on the laminated wood material.

Hereby, it is possible to decrease the work for pasting the laminated wood material on the surface of the floor boards. The floor boards are also able to bend at the inter connection thereof. Accordingly, the floor boards conform to irregularities of the surface of the floor boards, and therefore, sounds are not produced when they are walked upon. Furthermore, since the laminated wood material is connected by high strength materials, the laminated wood material may be cut.

Preferably, furthermore, relay connections have electric cords for connecting to other electric cords and branching them, electric cords provided between the corner bases, bolster bases each removably affixed on the placed floor so as to be below the middle portion of each electric cord, so that the inclined surfaces of the bolster bases are disposable in a line perpendicular to the electric cords. Furthermore, relay connections having electric cords for connecting to another electric cord and branching them.

Hereby, if the relay connections are provided so as to connect to each other, it is possible to decrease the labor of the worker for installing the wiring.

Preferably, furthermore, extension cords having three outlets for power source, each of which have attachment plugs, are provided on each tip thereof, each of which is provided at the center of the inside of the corner base so that each attachment plug is attached to each outlet. Furthermore, extension cords having three outlets for power source, each of which have attachment plugs, are provided on each tip thereof; the bolster base is provided on the placed floor and the like so as to exist above the middle of the line; each extension cord is provided at the center of the inside of the corner base so that each attachment plug is attached to each outlet.

Hereby, if plural extension cords having three outlets are used, it is easy to reconnect. If the length of each extension cord having three outlets is predetermined, three outlets thereof are under the corner base. Furthermore, the lack of the outlet does not occur.

Furthermore, the floor boards and/or the bolster bases are made from, for example, foam material of Polythyrol foam, or nonfoamed material, made of for example, aluminium metal and the like. If the floor board is made of metal, the office automation electrical apparatus and the low voltage electric cords and the like on the floor boards are protected from electromagnetic waves emitted from the high voltage electric cords under the floor boards. The lower ropes and the upper ropes are made from, for example, nylon, vinyl, or other types of desirable fibers; the fibers may consist of strands of material or resin coated fibers. The methods of providing the lower ropes and the upper ropes is adopted to be able to move rotatably in plane view. Furthermore, the connecting method of the lower ropes and the upper ropes is, for instance, any method of thermal deposition, binding, caulking and the like.

Other objects and features of this invention will become clear from the following description with reference to the accompanying drawings.

[Brief Description of the Drawings]

Fig. 1 is a perspective view of a double flooring for wiring in accordance with the preferred embodiment of the present invention.

Fig. 2 is a vertical section view of the double flooring for wiring.

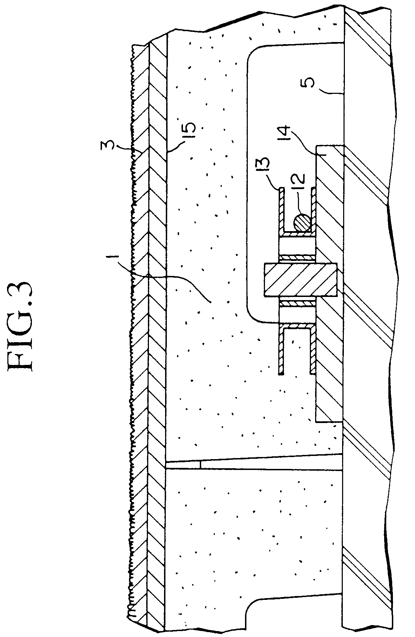

Fig. 3 is a vertical section view of the double flooring for wiring.

Fig. 4 is a perspective view of a double flooring for wiring.

Fig. 5 is a a vertical section view of the double flooring for wiring.

Fig. 6 is a perspective view of a floor board having feet in accordance with the second preferred embodiment of the present invention.

Fig. 7 is a perspective view of a floor board having feet at the corners in accordance with the other preferred embodiments of the present invention.

[Best Mode for Carrying Out the Invention]

With reference to the figures, preferred embodiments of the present invention will be described in detail in the following. In the following description, materials, structures, and the interrelationships of the structural elements are merely descriptive examples and are not intended to limit the scope of the invention.

FIRST EMBODIMENT

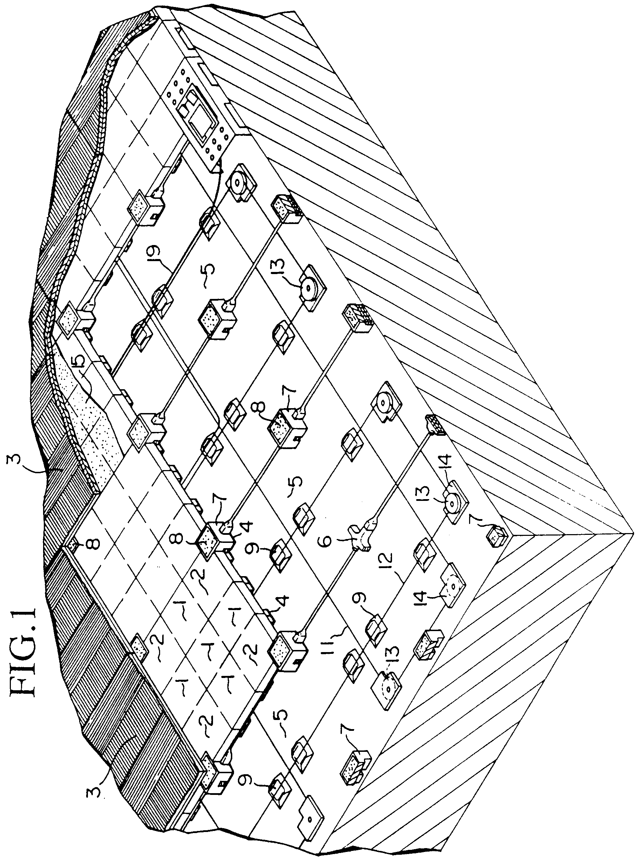

First, construction of a double flooring material for wiring a placed type in accordance with the first embodiment of the present invention will be described in detail with reference to Fig. 1.

Fig. 1 is a perspective view of a double flooring for wiring in accordance with the preferred embodiment of the present invention. The double flooring material in the embodiment, as shown in Fig. 1, is formed so as to dispose plural double flooring materials as above on the placed floor, slab and the like. Hereby, a space for wiring is formed between the lower surface of the floor boards 1 having feet and the top surface of the placed floor and like.

The double flooring material herein is composed of nine articles comprising:

five floor boards 1 having four feet of equal length on the corners thereof at least, which are formed in a cross-shape in plane view as a whole;

four floor boards 2 having feet at the corners, each of which is provided on the corner of the set; and furthermore,

a decorative material 3 for the floor which is glued on each floor board 1, of which the dimension is equal to the dimension of the floor boards 1; and

relaxation materials 4, for example, which are attached on the lower surface of each foot.

The floor boards 1 is formed of resin, for example, Polystyrol of the expansion ratio of 10 times which is made having self-extinguishing property, which is 165 mm high at each corner. Each floor board 2 having feet at the corner is the same dimension as the floor board 1. Each of which is having the missing portion of the reentrant-shape at one corner thereof, each floor board 2 having feet is Polystyrol which is the same as the floor board 1. Each floor board 1 and floor board 2 for the corner are connected to each other at the middle portion of side of the floor board 1 so as to be bendable at the middle portion. Each foot is 25 cm high, which is provided on the corner of the floor boards 1 and 2. The decorative material 3 for the floor is pasted on each floor board 1, which is the carpet tile; the absorbent material 4 is provided on the lower surface of each foot, which is made of Polyethylene foam. However, it is possible that unconnected floor board 1, 2 are put on the carpet tile.

At the reentrant-shape portion of adjacent the floor board for the corner 2, an extension cord 6 is put on the placed floor 5, under the reentrant-shape, which is +-shaped as a whole, having a plug at the tip thereof and three outlets at the other end, the plug of the adjacent extension cord 6 is attached to one outlet in the three outlets. Hereby, electricity is transferred from the electric distribution board to each extension cord.

Each corner base 7 is put on the center portion of each extension cord 6, which is of a length equal to the height of the corner base 1, 2, and is made of the same material. The absorbent materials 4, of a thickness of 1 mm, is pasted on the bottom surface of the corner base 7. An adhesive is pasted on the top surface of the corner base 7.

Each bolster base 9 is provided on the placed floor 5, at the middle portion of the right hand and left hand of the +-shape.

Lower ropes 11 for transmitting electric cords are tautly provided in order to be supported on four pulleys 13 which are adjacent to the others so as to form a cable. Upper ropes 12 for transmitting electric cords are tautly provided in order to be supported on four pulleys 13 which are adjacent to the others so as to form a cable. Each lower rope 11 passes through the bolster bases 9, 9. Each upper rope 12 passes above the bolster bases 9, 9 and each lower rope 11.

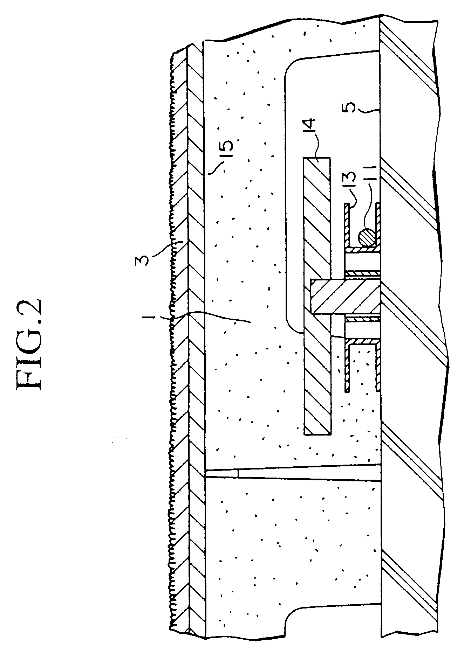

As shown Fig. 2, each pulley 13 for the lower ropes 11 is rotatably provided on an axis board 14. This axis board 14 for the pulley 13 for the lower ropes 11 is provided on the placed floor 5 so that the board thereof is faced to the above. Each pulley 13 for the upper ropes 12 is rotatably provided on an axis board 14. However, this axis board 14 for the pulley 13 for the lower ropes 11 is provided on the placed floor 5 so that the board thereof is attached on the surface of the placed portion. Each axis board 14 has a depth of cut corner, which is provided so as to interfit the side of the lower portion of the corner base 7. It is possible that the axis board is made of wood, resin, metal and the like. Each carpet tile as the decorative material 3 is that which divides a carpet square into four equal parts. Each carpet tile (which has at least two colors) is pasted in turn, by adhesive on the surface of each floor board 1, 2 so as to be offshade. It is possible to cut straight lines, curved lines, diagonal lines and the like in order to change the Thomson edge. The texture of the carpet tile as the decorative material 3 may be of other types, for example, aggregated woods and the like. The aggregated material may be, for example, resin, stone, ceramic tile and the like.

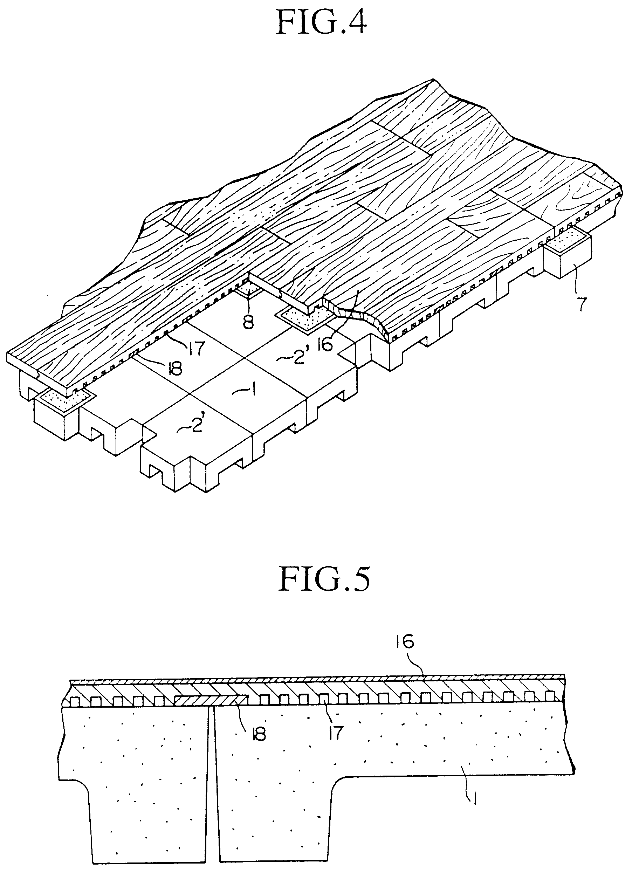

Furthermore, as shown in Figs. 4 and 5, in this example, the double flooring for wiring installation is approximately a rectangle comprising four floor boards 2' which have two missing portions of reentrant-shape at the two corners thereof and two floor boards 1 which exist between four floor boards 2', 2'. Accordingly, there are missing potions not only at the four corners of the double flooring for wiring installation but also at the middle portion of the shorter side of the double flooring for wiring installation.

In this case, decorative materials 16 are also pasted on the floor boards 1, 2'. However, these decorative materials 16 are different from the above. Therefore, each decorative material 16 is glued so as to be formed in curved patterns, in each back face thereof is formed plural channels 17 which are orthogonal to the curved pattern. A rubber board 18 is provided by pasting in an extended channel at the connection between the floor boards 1, 2'.

Next, the method of wiring is explained.

When wiring is necessary,

At first, the floor board 1 in which the cords are to be inserted is opened;

the lower rope 11 or the upper rope 12, which should be in the direction of transferring the electric cord 19 to be transferred, is selected;

the end of the electric cord 19 which should be transferred is a dummy fixed at the selected rope (the lower rope 11 or the upper rope 12) by being wound with vinyl tape 20,

the floor board 1 having feet or the floor board 2 having feet for the corner at the cross point of the lower rope 11 and the upper rope 12 is opened, the cross point is above the selected rope (11 or 12);

the selected rope (11 or 12) is pulled until the dummy fixed electric cord 19 comes out;

the dummy fixed electric cord 19 is taken up from the selected rope (11 or 12) by loosening the vinyl tape;

the selected cord 19 is transferred from the selected rope (11 or 12) to the other rope (11 or 12) which is orthogonal to the selected rope (11 or 12), then the length which is equal to the distance from the cross point to the destination;

lastly, the opened floor boards 1 are closed.

The wiring is able to be accomplished by the above process.

The double flooring for wiring installation in accordance with first embodiment (EXAMPLE 1) described provides the following advantages:

If there is slight irregularity on the surface of the placed floor 5, it is possible to comform in order that the floor board 1, 2, or 2' is able to move up and down.

Since the bolster bases 9 are provided on the placed floor 5, the orthogonal electric cords 19, 19 and the like cross at two levels. Accordingly, it is possible to easily pull the electric cords 19, 19 and the like, because there is no friction among the electric lines 19 and the like.

Since each floor board 1, 2, 2' is integrated by the adhesive tape which is pasted thereon, the floor board 1, 2, 2' does not move.

The geometric design is realized in order that many kinds of the carpet may be connected with each other.

Since the electric cords are provided, the work of wiring is safe and easy in order to prevent danger from the remaining electric cords.

Since the lower ropes 11 and the upper ropes 12 are under the floor boards 1, 2, 2', it is easy to rewire the electric cords 19, telephone cords, optical fibers and the like without wasting time.

Since the floor board 1, 2, 2' and the corner base 7 has possibility of quantity production and strength, and is secure, they are very economical.

The new floor is formed in order that the flooring materials 16 only are put on the placed floor 5.

The double flooring for wiring installation contributes to the diffusion of the office automation and home automation in order to provide the above advantages which are not in the double flooring for wiring installation in accordance with the prior art.

SECOND EMBODIMENT

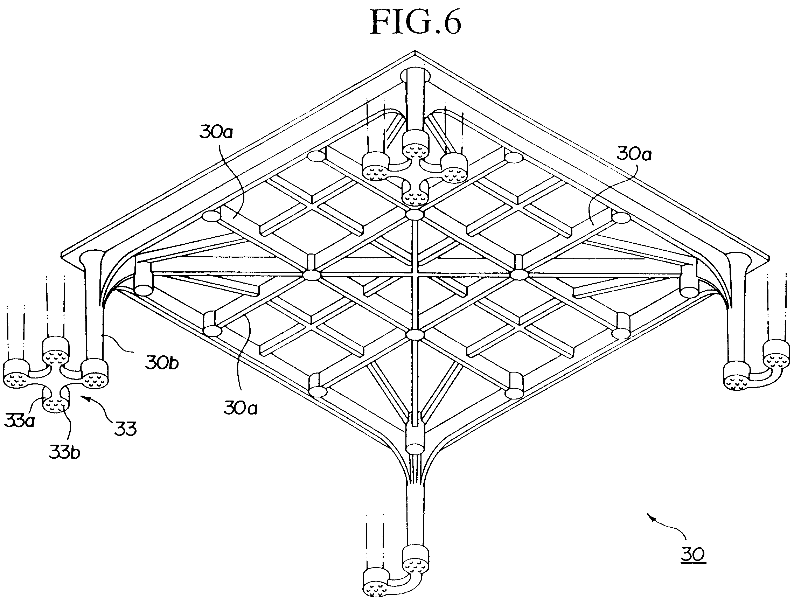

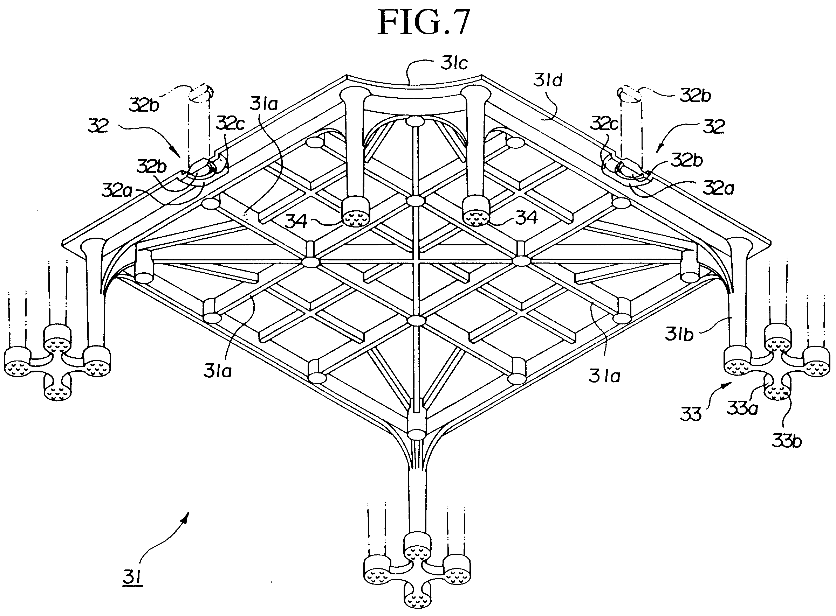

The double flooring for wiring installation in accordance with the second embodiment will be described in detail with reference to Figs. 6 and 7.

In the first embodiment, the floor boards (1, 2, 2') are made of resin. However, in this second embodiment, the floor board 30, 31 are made of aluminium. As shown Figs. 6 and 7, plural ribs 30a are provided on the lower surface of each floor board 30 having feet 30b, and plural ribs 31a are provided on the lower surface of each floor board 31 having feet 31b for the corners. Accordingly, design strength of the floor board 30, 31 may be increased. Furthermore, since the floor boards 30, 31 are made of aluminium, the office automation electrical apparatus and the low voltage electric cords and the like on the floor boards 30, 31 are protected from electromagnetic waves which are emitted from the high voltage electric cords under the floor boards 30, 31.

Furthermore, in this second embodiment, as shown in Fig. 7, two feet 31b are vertically provided on missing portion 31c of the floor board 31 having feet at the corners. Two pushing portions 32 are provided at the center of both sides of the missing portion 31c of the floor boards 30, 31. Each pushing portion 32 is semicircular in plane view. The pushing portion 32 comprising:

a shallow channel 32a provided in the top surface of the floor board 31, which is semicircular in plane view;

a pushing part 32b inside the shallow channel;

a weak part 32c bridging the shallow channel 32a and the pushing part 32b.

The pushing portion 32 which is the same as above is provided at the adjacent floor board 30, 31.

The method used is:

adjacent pushing parts 32b are pushed, the weak part 32c is bent and cut;

the pushing parts 32b are taken off;

the electric cords 19 and the like are passed through the hole formed in order that the pushing part 32b may be taken off. If the hole is unnecessary, a coin or the like is put on the shallow channel 32a.

A connector 33 is used for connecting floor boards 30, 31 to each other, as shown Figs. 6 and 7. The connector is +-shaped or --shaped in plane view, and is made of rubber. The connector 33 is comprising capping parts 33a. Each capping part 33a is able to fit the end of the each foot 30b, 31b, and plural small projections 33b on the lower surface thereof. The projection 33b prevents the slipping between the placed floor and the floor board 30, 31 and the production of noise from walking. On the other hand, a nonslipper 34 is attached on the lower surface of the each foot 31b of the floor board 31. Therefore, if floor boards 30, 31 are removed, the placed floor , slab and the like is not damaged.

**Claims**

1.  A double flooring for wiring installation wherein the double flooring is formed so that plural double flooring materials are lyingly provided on the placed floor or on slab directly when wiring, for example, computer, telephone, the other electrical apparatus and the like in modifying the position of office automation or house automation; the double flooring for wiring installation comprising:

    a floor board having feet which are of equal length at the corners thereof at least;

    a decorative material for the floor which is provided on the floor board having feet; and

    absorbent materials, for example, which are attached on the lower surface of each foot;

    whereby, the space for wiring is formed between the lower surface of the floor board having feet and the top surface of the placed floor and the like.

2.  A double flooring for wiring installation in accordance with claim 1 comprising:

    the floor board having feet which has a missing portion of reentrant part shaped provided at the corner portions thereof;

    the decorative material is rectanglar having an dimension the same as the dimension of the floor board having feet, which is provided on the floor board having feet;

    the absorbent material is sheet-shaped, which is provided at least under the feet; and

    furthermore, a corner base at least one of which has the shape the same as the shape of the aggregated missing portions which is formed by adjacent four floor boards having feet in plan view;

    a plurality of the floor boards having feet and corner bases are lyingly provided on the placed floor and the like so as to insert the corner base into the grouped missing portions;

    each absorbent material is provided on the floor boards having feet so that the corners of each absorbent material exists on the top of each corner base.

3.  A double flooring for wiring installation in accordance with claim 2 comprising:

    a floor board which is comprising the nine floor boards having feet which is provided at at least four corners of the floor boards having feet, each floor board having feet which are square, the nine floor boards having feet are furthermore arranged to be square on the whole, a floor board is having a missing portion of reentrant part shape at the four corner of the floor board;

    the corner base which is of the same shape as the shape of the grouped four missing portions;

    the absorbent material is pasted at the lower surface of the corner base;

    the decorative material is provided on the surface of the floor board, except on the missing portion;

    the absorbent material is provided on the lower surface of each foot;

    the floor board is lyingly provided on the placed floor and the like so that the corner base is provided on the missing portion, and the each corner of the decorative material is pasted on the top surface of the corner base by adhesive.

4.  A double flooring for wiring installation in accordance with claim 2 comprising:

    a floor board which is comprising the nine floor boards having feet, the feet are provided at at least four corner portions of the floor boards, each floor board having feet which is unitary so as to be reinforced by beams at least except at the corner portions of the floor boards having feet, each floor board having feet which are square, the nine floor boards having feet are furthermore arranged to be square on the whole, the floor board has a missing portion of reentrant part shaped at the four corners of the floor board;

    a corner base which is the same shape as the shape of the grouped four missing portions;

    the absorbent material is pasted on the lower surface of the corner base;

the decorative material is provided on the surface of the floor board, except on the missing portion;

the absorbent material is provided on the lower surface of each foot;

the floor board is lyingly provided on the placed floor and the like so that the corner base is provided at the missing portion, and the each corner of the decorative material is pasted on the top surface of the corner base by adhesive.

5. A double flooring for wiring installation in accordance with claim 4 comprising:

five floor boards having feet disposed in the middle portion of the nine floor boards having feet, each floor board having feet of the five floor boards having feet which are unitary, each floor board having feet comprising girders for reinforcing provided on the lower surface of each of four sides of each floor board having feet of the five floor boards having feet, and four feet of equal height which are vertically provided at each cross sections between each girder;

four floor boards having feet at the corners, which exist at the corner of the nine floor boards, each floor board having feet for the corner which is unitary, each floor board having feet for the corner comprising missing portions of an arc-shaped in plane view, each missing portion is provided at each corner of the four floor boards having feet for the corner, beams are arc-shaped in plane view, each beam is provided on the lower surface of the missing portion, and five feet are of equal height, three feet which are vertically provided at each corner of the floor boards having feet for the corner, the other feet are vertically provided at both sides of the beam;

shallow channels are half arc-shaped in plane view, each of which is provided at the top surface of the center of the each side not having a beam portion of the floor board having feet at the corner;

pushing portions for cutting are semicircular in plane view, having a radius more than the inner radius of the shallow channel, each of which is provided at the lower surface of the each side not having a beam portion of the floor board having feet for the corner so as to be concentric;

the corner base is flat and circular in plane view, is hollow, has no bottom, and has a height the same as the length between the top surface of the floor board having the feet and the bottom surface of the feet, and bowing outward.

6. A double flooring for wiring installation in accordance with one of claims 1 through 5 above, the double flooring for wiring installation further comprising:

bolster bases at least two of which are square each of which is of a height half of the height the floor board having feet, the bolster base, which are provided on the placed floor and the like so as to be parallel to each other;

the floor boards are lyingly provided on the placed floor so that the feet of the floor board are not disposed on the bolster bases.

7. A double flooring for wiring installation in accordance with claim 6, the bolster bases of which:

have both ends as formed inclined surface;

have heights half that of the feet of the floor boards; and

are lyingly provided on the placed floor so as to be in line and parallel to one another.

8. A double flooring for wiring installation in accordance with claims 6 or 7 above; wherein the floor board having feet, the corner base and the bolster base are made of thermoinsulating materials, a thin sheet of which is provided pasted on the bottom surface of the feet as the absorbent materials.

9. A double flooring for wiring installation in accordance with one of the claims 1 through 5 above,

the double flooring for wiring installation further comprising:

a lower rope group comprising a plurality of lower ropes, which pass through other wires and the line formed by plural feet so as to be parallel to the line, the lower rope group is turned at the required turning points, for example, close to a wall, so that each lower rope group is in the form of a cable;

an upper rope group which is comprising a plurality of upper ropes, which is formed as a cable in the same way as the lower rope group, and which is perpendicular to the lower rope group;

pulleys provided at each turning point, each of which supports each upper rope and each lower rope.

10. A double flooring for wiring installation in accordance with claim 6, 7 or 8 above wherein:

plural bolster bases are provided on the placed floor and the like so as to be parallel to each other;

furthermore, rotatable-type apparatus for distribution apparatus comprising:

the lower group which is comprising plural lower ropes, which pass through the wires and the space in which the bolster base does not exist, the lower group is turned at the required turning points so that each lower rope is in the form of a cable;

the upper group which is comprising plural upper ropes, which pass through the bolster base, is turned at the required turning points, and is returned on the other bolster base, which is formed in the shape of a cable as in the lower group.

11. A double flooring for wiring installation in accordance with claim 9 or 10 above, wherein:

each pulley for supporting the upper rope group and for supporting the lower rope group is rotatably provided on the board-shaped body which is missing a corner at least one of which is engaged to the feet;

each board-shaped body is provided on the placed floor and the like so as to engage the feet and to differ from the height of the channel of the pulley for supporting the upper rope group and the height of channel of the pulley for supporting the lower rope group.

12. A double flooring for wiring installation in accordance with one of the claims 1 through 11 above, wherein the decorative materials for the floor:

are of the same dimensions as the floor board;

are of at least two kinds;

are cut in the same form; and

wherein a plurality cut of decorative materials is mixed and pasted on the floor board;

whereby, double flooring for wiring installation may be freely designed by arranging many kinds of divided decorative material.

13. A double flooring for wiring installation in accordance with one of the claims 1 through 11 above:

wherein the decorative material is of the same dimensions measure as the top surface dimension of the floor board having feet, is square, is of at least two colors, is divided into two, four, or six equal parts by lines which are parallel or diagonal to the sides thereof,

whereby, double flooring for wiring installation may be freely designed by arranging many kind of divided decorative material.

14. A double flooring for wiring installation in accordance with one of the claims 1 through 11 above, wherein the decorative material is of the same dimension as the top surface dimension of the floor board having feet,

wooden flooring material having the split liner through a predetermined distance on the back surface thereof; or having the absorbent material on the back surface thereof.

15. A double flooring for wiring installation in accordance with one of the claims 1 through 11 above, wherein the decorative material is a composite wood material of a square or a composite aggregated comprising compressed wood and the like, the back surface of the composite wood materials being bonded with pressure sensitive adhesive double coated tape;

the composite wood material which is compressed and has high strength material which is pasted on the composite wood material.

16. A double flooring for wiring installation in accordance with one of the claims 2 through 15 above, the double flooring for wiring installation further comprising

relay connections having electric cords for connecting to other electric cords and branching them, each relay connection having a cord is connected to other cords, and is retracted in the corner base, on the surface of the board.

17. A double flooring for wiring installation in accordance with one of the claims 2 through 15 above, the double flooring for wiring installation further comprising:

relay connections having electric cords for connecting and branching other electric cords;

electric cords provided between the corner bases;

bolster bases each removably affixed on the placed floor so as to be below the middle portion of each electric cord, so that the inclined surfaces of the bolster bases are disposable in a line perpendicular to the electric cords.

18. A double flooring for wiring installation in accordance with one of the claims 2 through 15 above, the double flooring for wiring installation further comprising

extension cords having three outlets for power source, each of which have attachment plugs provided at each tip thereof,

each of which is provided at the center of the inside of the corner base so that each attachment plugs is attached to each outlet.

19. A double flooring for wiring installation in accordance with one of the claims 2 through 15 above, the double flooring for wiring installation further comprising

extension cords having three outlets for power source, each of which have attachment plugs provided at each tip thereof;

the bolster base provided on the placed floor and the like so as to exist above the middle of the line; and

each extension cord provided at the center of the inside of the corner base so that each attachment plug attaches to each outlet.

FIG.1

# FIG.2

EP 0 493 620 A1

# FIG.3

# FIG.4

# FIG.5

# FIG.6

EP 0 493 620 A1

# FIG.7

EP 0 493 620 A1

# INTERNATIONAL SEARCH REPORT

International Application No PCT/JP91/00981

| **I. CLASSIFICATION OF SUBJECT MATTER** (if several classification symbols apply, indicate all) ⁶ |
|---|

According to International Patent Classification (IPC) or to both National Classification and IPC

Int. Cl⁵  E04F15/024, 15/04, 15/18

| **II. FIELDS SEARCHED** |
|---|

| Minimum Documentation Searched ⁷ |
|---|

| Classification System | Classification Symbols |
|---|---|
| IPC | E04F15/024, 15/04, 15/18 |

Documentation Searched other than Minimum Documentation
to the Extent that such Documents are Included in the Fields Searched ⁸

Jitsuyo Shinan Koho  1926 - 1990
Kokai Jitsuyo Shinan Koho  1971 - 1990

| **III. DOCUMENTS CONSIDERED TO BE RELEVANT** ⁹ |
|---|

| Category * | Citation of Document, ¹¹ with indication, where appropriate, of the relevant passages ¹² | Relevant to Claim No. ¹³ |
|---|---|---|
| X | JP, U, 63-37741 (Kokuyo Co., Ltd.), March 11, 1988 (11. 03. 88), (Family: none) | 1-3, 12, 13 |
| Y | JP, A, 63-55256 (Naka Kogyo K.K., K.K. Naka Gijutsu Kenkyusho), March 9, 1988 (09. 03. 88), (Family: none) | 4, 5 |
| Y | JP, U, 58-75833 (Kyoto Die-Casting Co., Ltd.), May 23, 1983 (23. 05. 83), (Family: none) | 4, 5 |
| Y | JP, , 60-152740 (Nippon Telegraph & Telephone Corp., Kyodo Kizai K.K.), October 11, 1985 (11. 10. 85), (Family: none) | 5 |
| Y | JP, U, 62-131037 (Minoru Yoshida), August 19, 1987 (19. 08. 87), (Family: none) | 6-8 |

* Special categories of cited documents: ¹⁰
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

| **IV. CERTIFICATION** |
|---|

| Date of the Actual Completion of the International Search | Date of Mailing of this International Search Report |
|---|---|
| September 26, 1991 (26. 09. 91) | October 14, 1991 (14. 10. 91) |

| International Searching Authority | Signature of Authorized Officer |
|---|---|
| Japanese Patent Office | |

Form PCT/ISA/210 (second sheet) (January 1985)

**FURTHER INFORMATION CONTINUED FROM THE SECOND SHEET**

| | | |
|---|---|---|
| Y | JP, A, 62-25663 (Matsushita Electric Works, Ltd.), February 3, 1987 (03. 02. 87), (Family: none) | 14 |
| Y | JP, U, 1-154733 (Sanyo-Kokusaku Pulp Co., Ltd.), October 24, 1989 (24. 10. 89), (Family: none) | 15 |

---

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers    , because they relate to subject matter not required to be searched by this Authority, namely:

2.☐ Claim numbers    , because they relate to parts of the international application that do not comply with the prescribed requirements to such an extent that no meaningful international search can be carried out, specifically:

3.☐ Claim numbers    , because they are dependent claims and are not drafted in accordance with the second and third sentences of PCT Rule 6.4(a).

---

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)